# EUROPÄISCHE PATENTANMELDUNG

(11) **EP 0 999 094 A2**
(43) Veröffentlichungstag der Anmeldung: **10.05.2000**
(21) Anmeldenummer: 99121541.9
(22) Anmeldetag: 29.10.1999
(51) Int. Cl.: B60Q 1/00, B60Q 1/04

(54) **Scheinwerfer und Verfahren zur Montage**

(30) Priorität: 02.11.1998 DE 19850106
(71) Anmelder: Hella KG Hueck & Co., 59552 Lippstadt (DE)
(72) Erfinder: Frey, Christopher, Dr., 34132 Kassel (DE); Mertin, Heinrich, 59597 Erwitte (DE); Schöne, Knut, 59556 Lippstadt (DE)

(57) **Zusammenfassung**

Scheinwerfer, insbesondere für Kraftfahrzeuge, mit einer ein Gehäuse (2) an seiner einer Abdeckscheibe (4) abgewandten Rückseite (21) verschließenden Kappe (3), wobei die Kappe (3) als eine an einer Karosserie fest anordenbare, das Gehäuse (2) aufnehmende Gehäusehalterung ausgebildet ist.

Verfahren zur Montage eines eine Kappe (3) und ein Gehäuse (2) aufweisenden Scheinwerfers, insbesondere für Kraftfahrzeuge, wobei in einem ersten Schritt die Kappe (3) an einem Karosserieteil befestigt und elektrisch kontaktiert wird und wobei in einem zweiten Schritt das mit Lampen (9) bestückten Gehäuse (2) in eine Aufnahmeöffnung der Kappe (3) eingeschoben und verrastet wird.

## Beschreibung

Die Erfindung betrifft einen Scheinwerfer, insbesondere für Kraftfahrzeuge, mit einer ein Gehäuse an seiner einer Abdeckscheibe abgewandten Rückseite oder benachbarten Seite verschließenden Kappe.

Die Erfindung betrifft weiterhin ein Verfahren zur Montage eines eine Kappe und ein Gehäuse aufweisenden Scheinwerfers, insbesondere für Kraftfahrzeuge.

Aus der DE 40 21 255 A1 ist ein Scheinwerfer für Kraftfahrzeuge bekannt, der ein längliches Gehäuse aufweist, das in Abstrahlrichtung von einer Abdeckscheibe verschlossen ist. An seiner der Abdeckscheibe abgewandten Rückseite ist das Gehäuse von einer aufgesetzten Kappe verschlossen, die von einem verschwenkbaren Bügel gehalten wird. Das Gehäuse mit Kappe wird zur Montage an einem Karosserieteil bzw. an einem Stoßfänger in einem Außenkörper, der mit dem Karosserieteil bzw. Stoßfänger verbunden wird, eingesetzt. Das Gehäuseteil wird dabei von in einer Linie hintereinander angeordneten seitlichen Führungsnoppen in Längsführungen geführt. Über ein zusätzliches Rastelement ist das Gehäuse in dem Außenkörper verrastbar.

Nachteilig bei dem bekannten Scheinwerfer ist, daß die Gehäusehalterung bzw. der Außenkörper in seiner Längsrichtung relativ großvolumig gestaltet werden muß, um ausreichend Platz für die das Gehäuse abdeckende Kappe zur Verfügung zu stellen. Zusätzlich zum Rastmechanismus des Gehäuses in dem Außenkörper ist ein Rastmechanismus bzw. Rastbügel zur Fixierung der Kappe notwendig.

Der Scheinwerfer wird dadurch nicht nur relativ voluminös, sondern auch in seinem Aufbau relativ kompliziert und teuer. Zudem gestaltet sich ein Lampenwechsel, bei dem die Kappe abgenommen werden muß, relativ zeitaufwendig.

Aufgabe der vorliegenden Erfindung ist es daher, den bekannten Scheinwerfer kompakter, einfacher und kostengünstiger zu gestalten. Zugleich soll die Montage und die für einen Lampenwechsel notwendige Demontage vereinfacht werden.

Diese Aufgabe wird erfindungsgemäß in Verbindung mit dem Oberbegriff des Anspruches 1 dadurch gelöst, daß die Kappe als eine an einer Karosserie fest anordenbare, das Gehäuse aufnehmende Gehäusehalterung ausgebildet ist.

Dadurch, daß die Kappe selbst als eine das Gehäuse aufnehmende Gehäusehalterung ausgebildet ist, kann auf einen zusätzlichen Außenkörper gänzlich verzichtet werden. Dadurch wird insbesondere in Längsrichtung des Scheinwerfers Volumen gespart, so daß insgesamt der Scheinwerfer kompakter ausgebildet werden kann. Die Montage und Demontage des Schweinwerfers, insbesondere der Lampenwechsel, werden erheblich vereinfacht, da das umständliche Entfernen der Kappe von dem Gehäuse entfällt. Insgesamt kann damit der Scheinwerfer auch kostengünstiger gestaltet werden.

Gemäß einer bevorzugten Ausführungsform der Erfindung weist die Kappe auf ihrer dem Gehäuse zugewandten Innenseite ein erstes Kontaktelement und das Gehäuse auf seiner der Kappe zugewandten Außenseite ein zweites Kontaktelement auf und die Kontaktelemente sind durch Einschieben des Gehäuses in die Kappe elektrisch leitend miteinander verbindbar.

Durch die Verwendung der Kontaktelemente entfällt zugleich ein gesondertes manuelles Verbinden der elektrischen Kontakte. Lediglich durch Herausziehen des Gehäuses aus der Kappe wird die elektrische Verbindung zwischen Gehäuse und Kappe getrennt und durch Einschieben des Gehäuses in die Kappe wieder hergestellt.

Nach einer weiteren bevorzugten Ausführungsform der Erfindung sind quer zur Längsachse des Gehäuses Führungsnoppen angeordnet, die von korrespondierenden Führungen der Kappe aufnehmbar sind.

Das Gehäuse weist dabei zwei einander gegenüberliegende hintere Führungsnoppen in einem hinteren Bereich und zwei einander gegenüberliegende vordere Führungsnoppen in einem vorderen Bereich auf. Die Führungsnoppen sind in einem Abstand zur Längsachse angeordnet.

Dadurch, daß die Führungsnoppen in einem Abstand zur Längsachse angeordnet sind, also auf den einander gegenüberliegenden Außenseiten bzw. Außenwänden des Gehäuses jeweils eine vordere und eine hintere Führungsnoppe oberhalb der Längsachse und eine vordere und eine hintere Führungsnoppe unterhalb der Längsachse angeordnet sind, die in entsprechenden Führungen der Kappe geführt werden, wird eine besonders stabile Verbindung erreicht.

Gemäß einer weiteren bevorzugten Ausführungform der Erfindung sind die Führungsnoppen in den Führungen verrastbar.

Dadurch, daß die Führungen als selbstrastende Führungen ausgebildet sind, kann auf einen zusätzlichen Rastmechanismus verzichtet werden. Beispielsweise ist es möglich, daß Schweinwerfergehäuse zunächst translatorisch einzuschieben, bis die hinteren Führungsnoppen verrasten. Anschließend wird das Gehäuse um eine Achse nach unten geschwenkt, die durch die hinteren Führungsnoppen verläuft, so daß auch die vorderen Führungsnoppen verrasten. Der Einführungsspalt zwischen Scheinwerfergehäuse und einer Abdeckscheibenreinigungsanlage kann dadurch minimiert werden.

Nach einer weiteren bevorzugten Ausführungsform der Erfindung weist die Kappe ein Dichtungsbett auf, in das das Gehäuse mit einem Rand dichtend einsetzbar ist.

Durch die Verwendung eines Dichtungsbettes kann das Gehäuse problemlos gegenüber der Kappe abgedichtet werden.

Gemäß einer weiteren bevorzugten Ausführungsform der Erfindung ist in die Kappe ein Abdeckscheibenreinigungsanlage integriert.

Beim Ausrichten des Scheinwerfers bzw. der Kappe bei der Erstmontage entsteht durch die Integration der Abdeckscheibenreinigungsanlage zwischen Scheinwerfergehäuse und Abdeckschebenreinigungsanlage kein optisch unerwünschter Spalt, da beide Bauteile zusammen ausgerichtet werden. Trotzdem kann das Scheinwerfergehäuse später demontiert werden, ohne die Wasserzufuhr zur Abdeckscheibenreinigungsanlage zu dekontaktieren. Eine gesonderte Wassersteckdose kann dadurch entfallen.

Nach einer weiteren bevorzugten Ausführungsform der Erfindung sind an der Kappe Elektroniksteuergeräte montierbar.

Durch die Anordnung der Elektroniksteuergeräte des Scheinwerfers an der Kappe kann bei einer Demontage des Scheinwerfergehäuses die Elektronik am Fahrzeug verbleiben und muß nicht dekontaktiert werden.

Das aus DE 40 21 255 A1 bekannte Verfahren zur Montage eines Scheinwerfers weist die bereits erwähnten Nachteile auf, wobei insbesondere die zusätzliche Verriegelung der Kappe an dem Gehäuse zu der Gehäuseverriegelung an einem Außenteil sich nachteilig für die Montage auswirkt.

Weitere Aufgabe der Erfindung ist es daher, daß bekannte Verfahren zur Montage eines Scheinwerfers zu verbessern bzw. zu vereinfachen.

Diese Aufgabe wird in Verbindung mit dem Oberbegriff des Anspruches 9 dadurch gelöst, daß in einem ersten Schritt die Kappe an einem Karosserieteil befestigt und elektrisch kontaktiert wird, und daß in einem zweiten Schritt das mit Lampen bestückte Gehäuse in eine Aufnahmeöffnung der Kappe eingeschoben und verrastet wird.

Dadurch, daß die Kappe direkt an einem Karosserieteil befestigt und elektrisch kontaktiert wird, wird die Montage und Demontage des Gehäuses erheblich erleichtert.

Gemäß einer bevorzugten Ausführungsform der Erfindung wird zum Lampenwechsel das Gehäuse entrastet, in Abstrahlrichtung nach vom aus der Kappe herausgezogen und nach erfolgtem Lampenwechsel wieder in die Kappe eingeschoben und verrastet.

Dadurch, daß im Lampenwechsel das Gehäuse lediglich entrastet und aus der Kappe herausgezogen werden muß, kann der Lampenwechsel ohne zusätzliches Entfernen einer Kappe erfolgen und durch einfaches Einschieben und Verrasten des Gehäuses beendet werden. Gegenüber dem bekannten Verfahren wird der Lampenwechsel dadurch ebenfalls erheblich vereinfacht.

Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

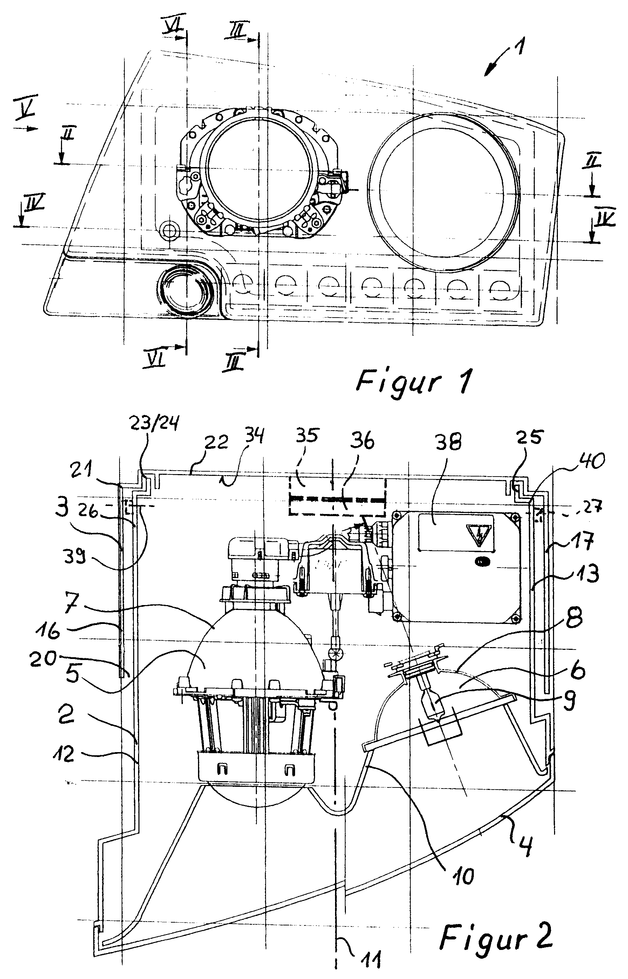

- Figur 1:: Eine Vorderansicht eines Scheinwerfers für Kraftfahrzeuge,
- Figur 2:: eine Draufsicht auf den Scheinwerfer von Figur 1 entlang der Linie II - II geschnitten,

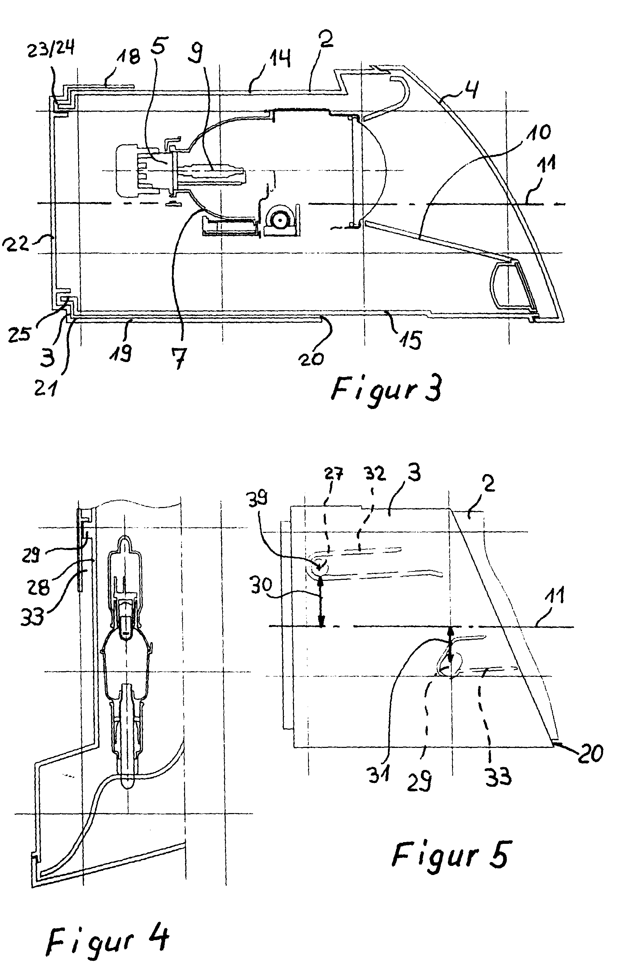

- Figur 3:: eine Seitenansicht des Scheinwerfers von Figur 1 entlang der Linie III - III geschnitten,
- Figur 4:: eine Draufsicht auf den Scheinwerfer von Figur 1 im Ausriß entlang der Linie IV - IV geschnitten,

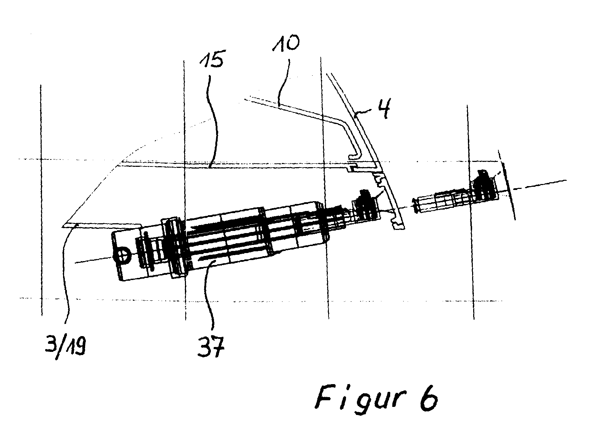

- Figur 5:: eine Seitenansicht des Scheinwerfers von Figur 1 aus Richtung V und
- Figur 6:: eine Seitenansicht des Scheinwerfers von Figur 1 entlang der Linie VI - VI geschnitten im Ausriß.

Ein Scheinwerfer 1 besteht im wesentlichen aus einem Gehäuse 2, einer Kappe 3 und einer Abdeckscheibe 4.

In dem Gehäuse 2 ist beispielsweise eine erste Lichteinheit 5 und eine zweite Lichteinheit 6 angeordnet. Die Lichteinheiten 5, 6 weisen jeweils einen Reflektor 7, 8 auf, in dem von der Rückseite her eine Lampe 9 eingebracht ist. Abstrahlseitig ist zwischen den Reflektoren 7, 8 und der Abdeckscheibe 4 eine Sichtblende 10 angeordnet. Quer zu seiner Längsachse 11 weist das Gehäuse zwei in einem Abstand zueinander angeordnete etwa parallel zueinander verlaufende Seitenwände 12, 13 auf. Die Seitenwände 12, 13 werden in vertikaler Richtung nach oben von einer oberen Seitenwand 14 und nach unten von einer unteren Seitenwand 15 begrenzt. In Abstrahlrichtung wird das Gehäuse 2 von der Abdeckscheibe 4 abgedeckt bzw. verschlossen.

Die Kappe 3 ist an einem nicht dargestellten, den Scheinwerfer 1 aufnehmenden Karosserieteil fest anordenbar und dient zum einen als rückwärtiger Abschluß des Gehäuses 2 und zum anderen als Gehäusehalterung. Zu diesem Zweck weist die Kappe 3 eine erste Kappenwand 16 und eine zweite Kappenwand 17 auf, die benachbart zu den Seitenwänden 12, 13 des Gehäuses 2 angeordnet sind. Die Kappenwände 16, 17 werden nach oben von einer oberen Kappenwand 18 und nach unten von einer unteren Kappenwand 19 begrenzt. Die obere Kappenwand 18 ist der oberen Seitenwand 14 und die untere Kappenwand 19 ist der unteren Seitenwand 15 benachbart. In Abstrahlrichtung nach vorn weist die Kappe 3 eine von den Kappenwänden 16, 17, 18, 19 begrenzte Aufnahmeöffnung 20 auf. Auf der der Aufnahmeöffnung 20 abgewandten Rückseite 21 ist die Kappe 3 von einer Rückwand 22 verschlossen.

Die Rückwand 22 weist zum Gehäuse 2 hin eine umlaufende Nut 23 auf, die als ein Dichtungsbett 24 ausgebildet ist, in das das Gehäuse 2 mit einem umlaufenden Rand 25 dichtend einsetzbar ist. Die Dichtwirkung kann durch eine Dichtung oder durch eine Dichtmasse unterstützt werden.

In horizontaler Richtung sind quer zur Längsachse 11 des Gehäuses 2 in einem der Rückwand 22 zugewandten hinteren Bereich 26 in das Gehäuses 2 bzw. der Seitenwände 12, 13 zwei einander gegenüberliegende hintere Führungsnoppen 27 angeordnet. In einem der Abdeckscheibe 4 zugewandten vorderen Bereich 28 der Seitenwände 12, 13 sind zwei einander gegenüberliegende vordere Führungsnoppen 29 angeordnet. Die hinteren Führungsnoppen 27 sind in vertikaler Richtung oberhalb der Längsachse 11 in einem oberen Abstand 30 angeordnet. Die vorderen Führungsnoppen 29 sind in vertikaler Richtung unterhalb der Längsachse 11 in einem unteren Abstand 31 zur Längsachse 11 angeordnet.

Die den Seitenwänden 12, 13 benachbarten Kappenwände 16, 17 weisen zu den hinteren Führungsnoppen 27 korrespondierende hintere Führungen 32 und zu den vorderen Führungsnoppen 29 mit diesen korrespondierenden vorderen Führungen 33 auf. Die Führungsnoppen 27, 29 sind in den Führungen 32, 33 verrastbar.

Die Kappe 3 weist an ihrer dem Gehäuse 2 zugewandten Innenseite 34 der Rückwand 22 ein erstes elektrisches Kontaktelement 35 auf. Ein dem ersten Kontaktelement 35 benachbartes zweites Kontaktelement 36 ist an dem Gehäuse 2 bzw. der Gehäuserückseite 40 so angeordnet, daß die Kontaktelemente 35, 36 nach Einschieben des Gehäuses 2 in die Kappe 3 elektrisch leitend miteinander verbunden sind.

In einem der Abdeckscheibe 4 benachbarten Bereich der Kappe 3 ist eine Abdeckscheibenreinigungsanlage 37 in die Kappe integriert.

Elektroniksteuergeräte 38 sind am Gehäuse 2 angeordnet und können mit diesem aus der Kappe 3 herausgezogen werden. Nach einer anderen nicht weiter dargestellten Ausführungsform ist zumindest ein Teil der Elektroniksteuergeräte 38 an der Kappe 3 angeordnet.

Zur Montage des Scheinwerfers 1 wird in einem ersten Schritt die Kappe 3 an dem nicht dargestellten Karosserieteil befestigt und elektrisch kontaktiert. In einem zweiten Schritt wird das mit Lampen 9 bzw. den Lichteinheiten 5, 6 bestückte Gehäuse 2 mit seinem hinteren Bereich 26 voran in die Aufnahmeöffnung 20 der Kappe 3 eingesetzt. Dabei wird das Gehäuse 2 zunächst translatorisch eingeschoben, bis die hinteren Führungsnoppen 27 in den hinteren Führungen 32 verrasten. Anschließend wird das Gehäuse 2 um eine Achse 39, die durch die hinteren Führungsnoppen 27 verläuft, nach unten geschwenkt, so daß auch die vorderen Führungsnoppen 29 in den vorderen Führungen 33 verrasten.

Zum Wechsel der Lampen 9 wird das Gehäuse 2 entrastet, in Abstrahlrichtung nach vorn aus der Kappe 3 bzw. aus der Aufnahmeöffnung 20 herausgezogen und nach erfolgtem Lampenwechsel wieder in die Kappe 3 eingeschoben und verrastet.

## Patentansprüche

1. Scheinwerfer, insbesondere für Kraftfahrzeuge, mit einer ein Gehäuse an seiner einer Abdeckscheibe abgewandten Rückseite oder benachbarten Seite verschließenden Kappe, dadurch gekennzeichnet, daß die Kappe (3) als eine an einer Karosserie fest anordenbare, das Gehäuse (2) aufnehmende Gehäusehalterung ausgebildet ist.

2. Scheinwerfer nach Anspruch 1, dadurch gekennzeichnet, daß die Kappe (3) auf ihrer dem Gehäuse (2) zugewandten Innenseite (34) ein erstes Kontaktelement (35) und das Gehäuse (2) auf seiner der Kappe (3) zugewandten Gehäuserückseite (40) ein zweites Kontaktelement (36) aufweist, und daß die Kontaktelemente (35,36) durch Einschieben des Gehäuses (2) in die Kappe (3) elektrisch leitend miteinander verbindbar sind.

3. Scheinwerfer nach Anspruch 1 oder 2, dadurch gekennzeichnet, daß in horizontaler Richtung quer zur Längsachse (11) des Gehäuses (2) Führungsnoppen (27,29) angeordnet sind, die von korrespondierenden Führungen (32,33) der Kappe (3) aufnehmbar sind.

4. Scheinwerfer nach Anspruch 4, dadurch gekennzeichnet, daß zwei einander gegenüberliegende hintere Führungsnoppen (27) in einem hinteren Bereich (26) des Gehäuses (2) und zwei einander gegenüberliegende vordere Führungsnoppen (29) in einem vorderen Bereich (28) des Gehäuses (2) angeordnet sind, und daß die vorderen und hinteren Führungsnoppen (27,29) in einem unterschiedlichen vertikalen Abstand (30, 31) zur Längsachse (11) angeordnet sind.

5. Scheinwerfer nach Anspruch 3 oder 4, dadurch gekennzeichnet, daß die Führungsnoppen (27, 29) in den Führungen (32, 33) verrastbar sind.

6. Scheinwerfer nach einem der Ansprüche 1 bis 5, dadurch gekennzeichnet, daß die Kappe (3) ein Dichtungsbett (24) aufweist, in das das Gehäuse (2) mit einem Rand (25) dichtend einsetzbar ist.

7. Scheinwerfer nach einem der Ansprüche 1 bis 6, dadurch gekennzeichnet, daß in die Kappe (3) eine Abdeckscheibenreinigungsanlage (37) integriert ist.

8. Scheinwerfer nach einem der Ansprüche 1 bis 7, dadurch gekennzeichnet, daß an der Kappe (3) Elektroniksteuergeräte (38) montierbar sind.

9. Verfahren zur Montage eines eine Kappe (3) und ein Gehäuse aufweisenden Scheinwerfers, insbesondere für Kraftfahrzeuge, dadurch gekennzeichnet, daß in einem ersten Schritt die Kappe an einem Karosserieteil befestigt und elektrisch kontaktiert wird, und daß in einem zweiten Schritt das mit Lampen bestückte Gehäuse (2) in eine Aufnahmeöffnung (20) der Kappe (3) eingeschoben und verrastet wird.

10. Verfahren nach Anspruch 9, dadurch gekennzeichnet, daß zum Lampenwechsel das Gehäuse (2) entrastet, in Abstrahlrichtung nach vorn aus der Kappe (3) herausgezogen und nach erfolgtem Lampenwechsel wieder in die Kappe (3) eingeschoben und verrastet wird.
